# EUROPÄISCHE PATENTSCHRIFT

(11) **EP 2 366 076 B1**
(45) Veröffentlichungstag und Bekanntmachung des Hinweises auf die Patenterteilung: **03.10.2012**
(21) Anmeldenummer: 09795918.3
(22) Anmeldetag: 15.12.2009
(51) Int. Cl.: F16N 7/34

(54) **DRUCKLUFTÖLER**
COMPRESSED AIR OILER
LUBRIFICATEUR À AIR COMPRIMÉ

(30) Priorität: 15.12.2008 AT 19482008
(43) Veröffentlichungstag der Anmeldung: 21.09.2011
(73) Patentinhaber: Parker-Origa Pneumatik GmbH, 270 Wiener Neustadt (AT)
(72) Erfinder: SEDERL, Christian, A-2753 Markt Piesting (AT); BAUREGGER, Erich, A-2640 Gloggnitz (AT)
(74) Vertreter: Müller, Karl-Ernst
(86) Internationale Anmeldenummer: PCT/EP2009/008983
(87) Internationale Veröffentlichungsnummer: WO 2010/072356

(56) Entgegenhaltungen:
- EP-A2- 0 122 602
- FR-A- 1 498 630
- US-A- 2 367 721
- US-A- 2 565 691
- US-A- 2 710 672
- US-A- 2 913 234
- US-A- 3 605 949

## Beschreibung

Die Erfindung betrifft einen Druckluftöler, mit einem Gehäuse mit Durchflusskanal für die Druckluft und einem Ölbehälter, wobei der Durchflusskanal eine Verengung sowie zumindest eine Verbindung mit dem Ölbehälter aufweist und eine an die Verengung angeschlossene Zerstäubereinheit vorgesehen ist, wobei die am Boden des Ölbehälters angeordnete und Ausströmdüsen für Luft sowie Ölzulaufbohrungen aufweisende Zerstäubereinheit über eine von dem Durchflusskanal vor dessen Verengung abgehende Leitung mit Luft versorgt wird und von der Zerstäubereinheit ein Verbindungsweg zur Aufnahme und Einleitung des Ölnebels in den Durchflusskanal verläuft und in dem Verbindungsweg eine als Tropfenseparator dienende Einrichtung angeordnet ist.

Ein Druckluftöler mit den vorgenannten Merkmalen ist in der US 2,913,234 A beschrieben. Aus dem einen eine Verengung in Form einer Venturidüse aufweisenden Durchflusskanal durchströmenden Luftstrom wird ein Teil des Luftstromes in einen Ölbehälter umgelenkt und nimmt hier in einer Zerstäubereinheit Öltröpfchen auf, so dass ein entsprechender Ölnebel entsteht. Bei dem aus der US 2,913,234 A bekannten Druckluftöler wird der Ölnebel zu seinem Austritt aus der Zerstäubereinheit zunächst umgelenkt und tritt in den oberen, nicht von dem Öl ausgefüllten Bereich des Ölbehälters ein und strömt von hier aus in den Durchflusskanal zurück. Dabei trifft der Ölnebel entweder auf eine im Ölbehälter verlaufende Verbindungsstange oder auf die Innenseite der Wandung des Ölbehälters, wodurch größere Öltröpfchen aus dem Ölnebel gelöst und in den Ölbehälter zurückfließen sollen. Insofern findet auf dem Weg des Ölnebels von der Zerstäubereinheit zum Durchflusskanal eine Tropfenseparation statt.

Mit einer derartigen Tropfenseparation ist der Nachteil verbunden, dass der in der Zerstäubereinheit erzeugte Ölnebel über den Ölbehälter geführt ist, so dass sich die Strömungsgeschwindigkeit des Ölnebels stark verlangsamt. Weiterhin ist die Masse der im Ölnebel in zulässiger Weise enthaltenen und weiter zu transportierenden Tropfen durch die Baugröße des Ölbehälters und die Anordnung der Zerstäubereinheit sowie der Verbindungsstange vorgegeben und insoweit kaum bestimmbar.

Ein ähnliches Prinzip der Tropfenseparation ist auch bei dem aus der EP 0 122 602 A bekannten Druckluftöler verwirklicht, bei welchem ebenfalls ein Ölbehälter und eine am Boden des Ölbehälters angeordnete Zerstäubereinheit vorgesehen sind. Auch hier wird der in einem durch einen rohrartigen Körper gebildeten Raum erzeugte und darin aufsteigende Ölnebel zunächst durch Ölnebelabgabedurchlässe umgelenkt und trifft außerhalb des Raumes auf eine Pufferplatte bzw. die Innenseite der Wandung einer Ölnebelführung, wodurch zu große Tröpfchen abgeschieden werden sollen, bevor der Ölnebel ebenfalls aus dem Ölbehälter in den Durchflusskanal zurückgeführt ist.

Bei dem weiterhin in der US 2,367,721 A beschriebenen Druckluftöler wird der in einer Art Zerstäubereinheit, welche in einem Ölbehälter angeordnet ist, erzeugte Ölnebelstrom über einen an die Zerstäubereinheit anschließenden größeren Raum des Ölbehälters geführt und dadurch verlangsamt, so dass sich hierdurch ebenfalls größere Öltröpfchen abscheiden sollen.

Schließlich sind Druckluftöler, bei welchen aus einem Durchflusskanal abgezapfte Druckluft über eine Leitung in eine Zerstäubereinheit eingeleitet und das darin erzeugte Luft-Öl-Gemisch über eine unmittelbar in den Durchflusskanal einmündende Leitung geleitet ist, auch aus der US 2,710,672 A sowie US 2,565,691 A bekannt.

Der Erfindung liegt die Aufgabe zugrunde, bei einem Druckluftöler mit den eingangs genannten gattungsgemäßen Merkmalen die Tropfenseparation bei dem in der Zerstäubereinheit erzeugten Ölnebel durch Anordnung eines wirksamen Tropfenseparators zu verbessern und die Baugröße des Druckluftölers zu verringern.

Die Lösung dieser Aufgabe ergibt sich aus dem Anspruch 1; vorteilhafte Ausgestaltungen und Weiterbildungen der Erfindung sind in den Unteransprüchen angegeben.

Die Erfindung sieht im Einzelnen vor, dass der Verbindungsweg als eine in der Verengung mündende Leitung ausgebildet ist und der in der Leitung angeordnete Tropfenseparator durch eine allenfalls mit Bohrungen definierter Öffnung versehene Prallplatte und eine Umlenkung für den Ölnebel gebildet ist.

Mit der Erfindung ist der Vorteil verbunden, dass die Zerstäubereinheit über die Leitung unmittelbar mit der Verengung des Durchflusskanals verbunden und die den Tropfenseparator ausbildende Prallplatte unmittelbar in der Leitung angeordnet sind, so dass die Baugröße des Druckluftölers vermindert ist. Auch findet vor der Tropfenseparation keine weitere Umlenkung des Ölnebels statt, so dass der Ölnebel unmittelbar auf die in der Leitung angeordnete Prallplatte trifft und die Tropfenseparation verbessert ist.

Gemäß einer ersten Ausführungsform ist in der Verengung eine Stauscheibe mit zumindest einem elastisch auslenkbaren Teil angebracht, wobei die Leitung zur Zerstäubereinheit vor dieser Stauscheibe abgeht.

Vorteilhafterweise kann vorgesehen sein, dass die Verengung als aus der gattungsbildenden US 2,913,234 A an sich bekannte Venturidüse ausgebildet ist. Dies ermöglicht einen hohen Wirkungsgrad, da außer einer Venturidüse - und allenfalls der Stauscheibe - kein weiteres Strömungs-hindernis im Hauptluftkanal vorhanden ist.

Gemäß einer vorteilhaften Ausführungsform der Erfindung sind weiterhin die Ölzulaufbohrungen der Zerstäubereinheit als Ringdüsen ausgeführt, die in der Mitte eine seitlich frei bewegliche Düsennadel aufweisen. Damit ist der Druckluftöler auch rückstromsicher, so dass es bei Entlüftung gegen die Durchflussrichtung während des Normalbetriebes zu keiner übermäßigen Ölförderung kommt.

In der nachfolgenden Beschreibung soll die Erfindung anhand eines in den Zeichnungen dargestellten vorteilhaften Ausführungsbeispieles näher erläutert werden.

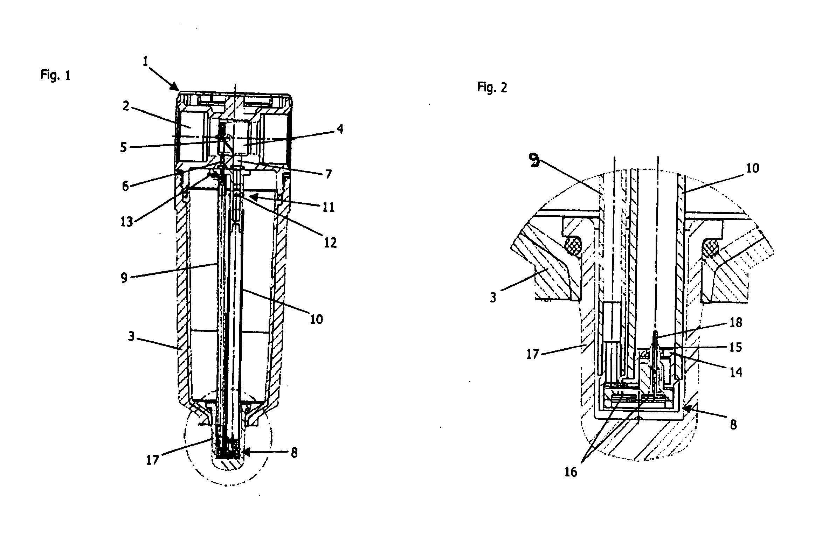

Dabei zeigt die Fig. 1 einen Schnitt durch einen erfindungsgemäßen Druckluftöler und die Fig. 2 zeigt in vergrößertem Maßstab den unteren Bereich des Ölbehälters mit der Zerstäubereinheit.

Das in Fig. 1 dargestellte Ausführungsbeispiel eines Druckluftölers zeigt dessen Gehäuse 1 mit Durchflusskanal 2 für die Druckluft. Daran befestigt befindet sich der Ölbehälter 3.

Im Durchflusskanal 2 befindet sich eine vorzugsweise als Venturidüse 4 ausgebildete Verengung mit vorteilhafterweise einer Stauscheibe 5. Diese Stauscheibe 5 weist vorzugsweise einen elastisch auslenkbaren Teil auf, der über einen sehr großen Druckbereich einen im wesentlichen konstanten Differenzdruck bewirkt. In Durchflussrichtung vor der Venturidüse 4 und vor einer entsprechenden Stauscheibe 5 befindet sich eine Verbindungsstelle 6 zwischen Durchflusskanal 2 und Behälter 3. In der Engstelle der Venturidüse 4 befindet sich eine zweite Verbindungsstelle 7 zwischen Durchflusskanal 2 und Behälter 3. Beide Verbindungen 6, 7 können vorzugsweise durch einen Schieber 13 verschlossen werden.

Beide Verbindungsstellen 6, 7 sind mit einer Zerstäubereinheit 8 verbunden, die in Fig. 2 in größerem Maßstab im Detail dargestellt ist. Von der ersten Verbindungsstelle 6 führt ein Schlauch 9 zur Zerstäubereinheit, welche über ein im wesentlichen starres Rohr 10 mit der zweiten Verbindungsstelle 7 verbunden ist, wobei das Rohr 10 die Zerstäubereinheit 8 auch mechanisch trägt bzw. fixiert. Im oberen Abschnitt von der Zerstäubereinheit 8 zur zweiten Verbindungsstelle 7 führenden Rohres 10 ist kurz vor dem Übergang zum Gehäuse 1 ein Tropfenseparator 11 angebracht.

Die Zerstäubereinheit 8 ist am tiefsten Punkt des Behälters 3 vorzugsweise in einem Schauglas 17 angeordnet, um die Funktion von außen kontrollieren zu können, und besteht aus einer Düsenplatte 14, die eine oder mehrere Luftdüsen 15 und eine oder mehrere Ölzulaufbohrungen 16 enthält. Die Olzulaufbohrungen 16 sind als Ringdüsen ausgeführt, die in der Mitte eine seitlich frei bewegliche Düsennadel 18 besitzen, welche einerseits den Öldurchfluss begrenzt und andererseits durch ihre Beweglichkeit ein Verstopfen der Düse verhindert.

Strömt Druckluft durch den Öler, dann wird durch die Venturidüse 4 und allenfalls die Stauscheibe 5 eine Druckdifferenz zwischen dem Behälter 3 und dem Durchflusskanal 2 erzeugt. Von der Verbindungsstelle 6 strömt nun Luft über den Schlauch 9 in die Zerstäubereinheit 8. Die aus den Düsen 15 austretende Luft drückt zuerst das im Rohr 10 befindliche Öl nach oben, das aber durch die seitlichen Öffnungen im Tropfenseparator 11 wieder in den Behälter 3 zurückfließt. Der dann in der Zerstäubereinheit 8 entstehende Ölnebel wird mit dem Luftstrom zum Tropfenseparator 11 gefördert.

Der Tropfenseparator 11 ist so dimensioniert und einstellbar, dass nur ein Ölnebel mit Tropfen bis zu einer bestimmten Masse weitertransportiert wird. Alle ausgesonderten Tropfen fallen in den Ölbehälter 3 zurück. Dazu umfasst der Tropfenseparator 11 eine Prallplatte 12, auf welche die von der Zerstäubereinheit 8 nach oben gewirbelten Tropfen auftreffen. Der Luftstrom aus dem Rohr 10 wird von der Prallplatte 12 seitlich nach außerhalb des Rohres 10 abgetenkt und tritt oberhalb der Prallplatte 12 wieder in das Rohr 10 ein und gelangt anschließend zur Verbindungsstelle 7, wo der Ölnebel dann in den Durchflusskanal 2 gelangt. Die Größe der seitlichen Ablenkung und die Länge der Öffnung im Rohr 10 bestimmen die Anzahl und Größe der ausgesonderten Tropfen. Die Prallplatte 12 kann auch, je nach geforderter Ölmenge, mit einer oder mehreren Bohrungen ausgeführt sein.

Durch eine entsprechende, über der Eintrittsöffnung im Rohr 10 oberhalb der Prallplatte montierbare und verschiebbare Hülse kann der Querschnitt der Eintrittsöffnung für den Wiedereintritt des Luftstromes mit den Öltröpfchen in das Rohr 10 zusätzlich verändert werden. Dadurch ist eine weitere Dosierung des über die Verbindungsstelle 7 in den Hauptluftstrom geführten Ölnebels möglich.

Der erfindungsgemäße Druckluftöler hat den zusätzlichen Vorteil, dass ein Nachfüllen des Ölbehälters 3 während des Betriebes möglich ist. Während das gesamte System unter Druck steht kann Öl in den Behälter 3 nachgefülft werden. Dazu wird eine Einfüllschraube am Gehäuse 1 um weniger als eine Umdrehung, vorzugsweise um 90°, gegen eine Anschlagnase gedreht. Während dieser Drehung bewegt ein am unteren Ende der Einfüllschraube außermittig angebrachter Zapfen den Schieber 13, der die Verbindungsbohrungen 6, 7 des Durchflußkanals 2 zum Behälter 3 absperrt. Kurz bevor der Anschlag erreicht wird, erfolgt eine Druckentlastung des Behälters 3 in die Umgebung. Danach wird die Anschlagnase, die die Drehung der Einfüllschraube begrenzt hat, nach unten gedrückt, wodurch die Einfüllschraube um einen weiteren Betrag, vorzugsweise weitere 90°, gedreht und aus dem Gehäuse 1 herausgezogen werden kann. Jetzt kann Öl in den nun drucklosen Behälter 3 eingefüllt werden. Danach wird die Einfüllschraube wieder in das Gehäuse 1 eingesetzt und über die Anschlagnase zurück zugedreht. Während dieser Drehung wird der Öler wieder druckdicht gemacht und die Verbindungsbohrungen 6, 7 zum Durchflußkanal 2 werden durch den Schieber 13 wieder geöffnet, sodass der Behälter 3 wieder unter Druck steht.

## Patentansprüche

1. Druckluftöler, mit einem Gehäuse (1) mit Durchflusskanal (2) für die Druckluft und einem Ölbehälter (3), wobei der Durchflusskanal (2) eine Verengung (4) sowie zumindest eine Verbindung (6, 7) mit dem Ölbehälter (3) aufweist und eine an die Verengung (4) angeschlossene Zerstäubereinheit (8) vorgesehen ist, wobei die am Boden des Ölbehälters (3) angeordnete und Ausströmdüsen (15) für Luft sowie Ölzulaufbohrungen (16) aufweisende Zerstäubereinheit (8) über eine von dem Durchflusskanal (2) vor dessen Verengung (4) abgehende Leitung (9) mit Luft versorgt wird und von der Zerstäubereinheit (8) ein Verbindungsweg zur Aufnahme und Einleitung des Ölnebels in den Durchflusskanal (2) verläuft und in dem Verbindungsweg eine als Tropfenseparator dienende Einrichtung angeordnet ist, **dadurch gekennzeichnet, dass** der Verbindungsweg als eine in der Verengung (4) mündende Leitung (10) ausgebildet ist und der in der Leitung (10) angeordnete Tropfenseparator (11) durch eine allenfalls mit Bohrungen definierter Öffnung versehene Prallplatte (12) und eine Umlenkung für den Ölnebel gebildet ist.

2. Druckluftöler nach Anspruch 1, **dadurch gekennzeichnet, dass** in der Verengung (4) eine Stauscheibe (5) mit zumindest einem elastisch auslenkbaren Teil angebracht ist und die Leitung (9) zur Zerstäubereinheit (8) vor dieser Stauscheibe (4) abgeht.

3. Druckluftöler nach Anspruch 1 oder 2, **dadurch gekennzeichnet, dass** die Verengung (4) als Venturidüse ausgebildet ist.

4. Druckluftöler nach Anspruch 2 oder 3, **dadurch gekennzeichnet, dass** die Leitung (10) zur Aufnahme und Einleitung des Ölnebels unmittelbar hinter der Stauscheibe (5) in die Verengung mündet.

5. Druckluftöler nach einem der Ansprüche 1 bis 4, **dadurch gekennzeichnet, dass** die Ölzulaufbohrungen (16) der Zerstäubereinheit (8) als Ringdüsen ausgeführt sind, die in der Mitte eine seitlich frei bewegliche Düsennadel (18) aufweisen.

## Claims

1. Compressed air lubricator having a casing (1) with a flow channel (2) for the compressed air and an oil container (3), whereby the flow channel (2) has a constriction (4) as well as at least one connection (6, 7) with the oil container (3) and is provided with an atomiser unit (8) connected to the constriction (4) whereby the atomiser unit (8) arranged on the base of the oil container (3) and having outlet nozzles (15) for air and oil supply holes (16) is supplied with air via a tube (9) exiting from the flow channel (2) before its constriction (4), and a connection path is extending from the atomiser unit (8) for taking up and introducing the oil mist into the flow channel (2) and a unit serving as a droplet separator is arranged in said connection path **characterized in that** the connection path is designed as a pipe (10) opening into the constriction (4) and the droplet separator (11) arranged within the pipe (10) is formed by an impact plate (12) provided with holes having a defined opening and a deflection for the oil mist

2. Compressed air lubricator according to claim 1, **characterised in that** arranged in the constriction (4) is a baffle plate (5) with at least one elastically deflectable section and the tube (9) to the atomiser unit (8) exits before this baffle plate (5).

3. Compressed air lubricator according to claim 1 or 2, **characterised in that** the constriction (4) is designed as a Venturi valve.

4. Compressed air lubricator according to claim 2 to 3, **characterised in that** the pipe (10) for taking up and supplying the oil mist opens into the constrict-tion immediately after the baffle plate (5).

5. Compressed air lubricator according to one of claims 1 to 4, **characterised in that** the oil inlet holes (16) of the atomiser unit (8) are designed as ring nozzles which in the middle have a laterally freely movable pintle (18).

## Revendications

1. Lubrificateur à air comprimé avec un boîtier (1) doté d'un canal d'écoulement (2) pour de l'air comprimé et d'un réservoir de lubrifiant (3), le canal d'écoulement (2) présentant un rétrécissement (4) ainsi qu'au moins une liaison (6, 7) avec le réservoir de lubrifiant (3) et une unité de pulvérisation (8) raccordée au rétrécissement (4), l'unité de pulvérisation (8) disposée sur le fond du réservoir de lubrifiant (3) et présentant des buses d'évacuation pour l'air ainsi que des perçages d'amenée de lubrifiant (16) étant alimentée en air par une conduite (9) partant du canal d'écoulement (2) avant son rétrécissement (4) et une voie de liaison s'étend depuis l'unité de pulvérisation (8) pour la réception et l'introduction du brouillard de lubrifiant dans le canal d'écoulement (2) et un dispositif servant de séparateur de gouttes est disposé dans la voie de liaison, **caractérisé en ce que** la voie de liaison est réalisée comme une conduite (10) débouchant dans le rétrécissement (4) et le séparateur de gouttes (11) disposé dans la conduite (10) est constitué d'une plaque de déviation (12) pourvue éventuellement de perçages d'ouverture définie et d'une déviation pour le brouillard de lubrifiant.

2. Lubrificateur à air comprimé selon la revendication 1, **caractérisé en ce qu'**un orifice (5) avec au moins une partie pouvant être déviée élastiquement est monté dans le rétrécissement (4) et la conduite (9) part vers l'unité de pulvérisation (8) avant cet orifice (5).

3. Lubrificateur à air comprimé selon la revendication 1 ou 2, **caractérisé en ce que** le rétrécissement (4) est réalisé comme un tube de Venturi.

4. Lubrificateur à air comprimé selon la revendication 2 ou 3, **caractérisé en ce que** la conduite (10) pour la réception et l'introduction du brouillard de lubrifiant débouche directement derrière l'orifice (5) dans le rétrécissement.

5. Lubrificateur à air comprimé selon l'une quelconque des revendications 1 à 4, **caractérisé en ce que** les perçages d'amenée de lubrifiant (16) de l'unité de pulvérisation (8) sont réalisés comme des buses concentriques qui présentent au milieu une aiguille (18) pouvant se déplacer librement latéralement.
